## Europäisches Patentamt

## European Patent Office

## Office européen des brevets

(11) veröffentlichungsnummer: **0 016 369**

**A1**

(12) **EUROPÄISCHE PATENTANMELDUNG**

(21) Anmeldenummer: 80101062.0

(22) Anmeldetag: 03.03.80

(51) Int. Cl.³: **C 04 B 29/04**
C 04 B 31/06

(30) Priorität: 05.03.79 DE 2908435

(43) Veröffentlichungstag der Anmeldung:
01.10.80 Patentblatt 80/20

(84) Benannte Vertragsstaaten:
AT BE CH DE FR GB IT LU NL SE

(71) Anmelder: Ihlefeld, Karl-Helmut
Kallstadt 6
D-6943 Birkenau(DE)

(72) Erfinder: Ihlefeld, Karl-Helmut
Kallstadt 6
D-6943 Birkenau(DE)

(54) Verfahren zur Herstellung von Mineralfaserbeton sowie Mineralfasern für denselben.

(57) Bei diesem Mineralfaserbeton handelt es sich um einen Beton mit Portlanzement als Bindemittel und einer Armierung aus Mineralfasern, wobei einerseits die Mineralfasern aus einem Puzzolan bestehen, das bei Reaktion mit dem freien Kalk des Portlandzementes Calciumaluminathydrat bildet, und andererseits dem Beton kalkbindende Stoffe zugesetzt werden, die diese Reaktion in kontrollierter Weise ablaufen lassen.

Gleichzeitig findet die Reaktion bei der Bildung des Calciumaluminathydrats nur auf der Oberfläche der Faser statt, sodaß langfristig die Faser bei ausreichend eingestellter Dicke als funktionsfähige Betonarmierung erhalten bleibt.

Geeignete Puzzolane, aus denen solche Fasern bestehen können, haben einen Erweichungspunkt von über 1000°C. Sie sind daher zur Armierung feuerbeständiger Bauteile geeignet.

Die Faserarmierung im Beton kann in Form von Einmischen von losen Faserabschnitten, als eingelegtes Faservlies und als eingelegtes Gewebe erfolgen.

KARL-HELMUT IHLEFELD | Quellenhof
Kallstadt 6
6943 Birkenau
Ruf 06201 / 21916

A Z: 1.25.34 PAE

Verfahren zur Herstellung von Mineralfaserbeton sowie
Mineralfasern für denselben

Die Erfindung bezieht sich auf den Aufbau und die Zusammensetzung eines Betons mit Portlandzement als Bindemittel und einer Armierung aus Mineralfasern, wobei die Zusammensetzung des Betons und die chemische Beschaffenheit der Faser aufeinander abgestimmt sind.

Es ist bekannt, aus einem Gemisch von Asbestfasern und Zement sehr feste witterungsbeständige und biegesteife Formteile wie Platten, Rohre und ähnliches herzustellen. Asbest hat jedoch zwei Nachteile: Er ist physiologisch sehr aggressiv und Asbestzement ist nicht feuerbeständig im Sinne der DIN 4102, weil beim Erhitzen das Kristallwasser des Asbests den Beton auseinander treibt. Man sucht daher nach anderen Mineralfasern, die den gleichen Zweck erfüllen aber die Nachteile vermeiden.

Es lag nahe, ein Gemisch aus Glasfasern und Zement zu verwenden. Jedoch stellte sich bald heraus, daß der freie Kalk des Portlandzementes mit dem Silicium der Glasfaser eine Verbindung eingeht, die einerseits die Faser bis auf 3 % ihrer ursprünglichen Festigkeit innerhalb eines Jahres schwächt und andererseits ein Reaktionsprodukt ergibt, das ein größeres Volumen einnimmt und somit den Beton zersprengt: Die Verbindung ist nicht raumbeständig.

Es ist daher der Vorschlag gemacht worden, Glasgemenge zu verwenden, die nicht vom freien Kalk des Zementes angegriffen werden. Das ist in gewissem Grade mit Zirkonglas und Zinkglas gelungen, jedoch nicht vollständig. Daher ist auch eine solche Lösung, ganz abgesehen von dem hohen Preis dieses Glases, im Sinne der im Bauwesen zu fordernden absoluten Beständigkeit nicht befriedigend. Ferner weisen alle Glasrohstoffe Erweichungspunkte bei Temperaturen ab 400°C auf, sie sind also nicht geeignet, im Brandfall noch Lasten aufzunehmen.

Weiterhin ist der Vorschlag gemacht worden, anstelle von Glasgemengen Rohstoffe zu verwenden, die als Betonzuschlag geeignet sind und sich zu Fasern verschmelzen lassen. Dabei hat sich aber herausgestellt, daß auch diese Stoffe als glasige Fasern mit dem freien Kalk des Zementes reagieren, wenn auch nicht so intensiv wie reines Glas. Insbesondere zeigte sich, daß alle diese Stoffe durch ihren relativ hohen Gehalt an Calciumoxid und anderen Alkalien einen Erweichungspunkt von etwa 750°C haben und damit unter den Prüftemperaturen der DIN 4102 liegen. Außerdem wird Calciumoxid der Schmelze hinzugefügt, um das Viskositätsverhalten bei der Faserherstellung zu verbessern. Solche Fasern sind als Steinwolle auf dem Markt bekannt.

In diesem Zusammenhang ist der Vorschlag gemacht worden, statt des kalkhaltigen Portlandzementes den kalkfreien Tonerdeschmelzzement zu verwenden. Ein solches Verfahren wird in der deutschen PS Nr. 1 021 290 beschrieben. Allerdings ist das Produkt aus diesem Verfahren durch den hohen Preis für Tonerdeschmelzzement gegenüber dem Zementasbest herkömmlicher Art nicht zu bezahlen.

Die Erfindung hat sich daher die Aufgabe gestellt, einen raumbeständigen mit Mineralfasern armierten Beton zu wirtschaftlichen Bedingungen herzustellen.

Auf der Suche nach einem geeigneten Faserrohstoff lag es also nahe, nach kalkarmen oder kalkfreien Materialien zu forschen. Hier bieten sich Gemenge aus Kieselsäure und Aluminiumoxid an, sie sind in reiner Form als Kaolin bekannt.
Stellt man aus einem solchen Rohstoff durch Erhitzen einen keramischen Scherben her, so erhält man ein Puzzolan. Wird dieses Puzzolan fein vermahlen, so reagiert es mit dem freien Kalk des

Portlandzementes zu einer sehr raumbeständigen festen Verbindung, dem Calciumaluminathydrat. Da nun üblicher Weise für Isolierzwecke gelieferte Mineralfasern sehr dünn in einer Dicke von 2 - 8 micron hergestellt werden, liegt das als Faser hergestellte Puzzolan in etwa der gleichen fein verteilten Form vor, wie beim Vermahlen des Puzzolans zum Zwecke der Herstellung von Puzzolanzement. Das bedeutet aber, daß eine solche Faser vollständig aufgelöst und in Calciumaluminathydrat umgewandelt wird. Damit entsteht zwar eine raumbeständige Verbindung, aber die Übertragung von Zugbeanspruchungen in solchem Gemenge ist nach Ablauf der Reaktion nicht mehr möglich.

Nach der gegenwärtigen Lehre ist demnach eine solche Faser nicht als Armierung im Beton geeignet.

Nun ergab sich aber ganz überraschend, daß an der Oberfläche eines größeren Körpers aus Puzzolan zwar eine Reaktion mit dem freien Kalk des Zementes stattfindet, diese jedoch nicht tiefer in den Körper eindringt, selbst dann nicht, wenn noch laufend Kalk einwirkt. Daraus ergibt sich, daß das Reaktionsprodukt eine Schutzschicht bildet, die eine weitere Reaktion zwischen Kalk und Puzzolan verhindert. Diese neue Erkenntnis wird erfindungsgemäß auf die Gestaltung der Mineralfaser angewandt. Stellt man eine Mineralfaser aus einem Puzzolan her und macht sie so dick, daß die Reaktion mit dem Kalk an der Oberfläche nicht bis zum Kern vordringen kann, so bleibt ein Teil der Faser erhalten, der in der Lage ist, Zugkräfte nach Ablauf der Reaktion zu übertragen. Das als Grenzschicht zwischen Faser und Matrix entstandene Calciumaluminathydrat schützt die Faser vor weiterem Abbau. Gleichzeitig wird erreicht, daß diese Grenzschicht durch ihre Verzahnung mit der Faser einerseits und der Matrix aus Portlandzement andererseits einen vorzüglichen Haftvermittler darstellt, der es ermöglicht, die der Faser innewohnenden Zugkräfte verlustfrei zu übertragen. Demnach wird die Reaktion zwischen Faser und Zement erfindungsgemäß sogar angestrebt. Erfindungsgemäß wird daher eine Mineralfaser aus einem Puzzolan mit einer solchen Dicke hergestellt, daß diese mindestens mehr als doppelt so dick wie die Reaktionstiefe zwischen Oberfläche und Freikalk ist.

Es ist bekannt, daß die spezifische Zugfestigkeit der Mineralfaser mit sinkendem Querschnitt zunimmt. Um nun eine möglichst hohe Zugfestigkeit zu erreichen, kann es zweckmäßig sein, die Mineralfaser möglichst dünn zu halten. Das geht aber nach dem auf Seite 3 gesagten nur, wenn die Reaktionstiefe auf der Oberfläche der Faser möglichst gering gehalten wird und unter Kontrolle gebracht wird. Das geschieht erfindungsgemäß dadurch, daß dem Betongemenge unschädliche Stoffe zugesetzt werden, die den freien Kalk ganz oder teilweise binden. Solch ein Zusatz kann ferner bewirken, daß bei dem bereits erhärteten Beton durch Feuchtigkeit kein Kalk mehr freigesetzt werden kann, der noch nachträglich eine Reaktion mit der Faser eingehen könnte. Durch diese erfindungsgemäße Maßnahme wird eine zusätzliche Sicherung eingebaut, die die Beständigkeit des Faserbetons langfristig gewährleistet.

An sich ist bereits bekannt, solche kalkbindenden Stoffe einem Faserbeton zuzusetzen. So wird in der deutschen OS 27 02 419 ein Spülmittel aus Kieselsäure erwähnt, das in stöchiometrischem Verhältnis zum freien Kalk zugegeben wird, diesen also vollständig binden soll. Bei jenem Verfahren wird als Armierung Glasfaser verwendet, die aber auf keinen Fall eine Reaktion mit dem Kalk des Zementes eingehen darf.

In diesem erfindungsgemäßen Verfahren wird jedoch eine Reaktion mit der Faser gezielt angestrebt, sodaß die Zugabe des kalkbindenden Stoffes lediglich eine Regelfunktion über die Intensität der Reaktion zwischen Freikalk und Faser ausübt. Auch wenn ein erheblicher Überschuß an Kalkbinder zugegeben wird, ist auf jeden Fall eine Reaktion zwischen allen Komponenten zu erwarten, wenn die Betonmischung angemacht wird, nur die Intensität der Reaktion mit der Faser wird geringer, wenn viel Materie zum Binden des Kalkes vorhanden ist. Erfindungsgemäß wird daher der Bereich möglicher kalkbindender Stoffe viel weiter gezogen als in der genannten Offenlegungsschrift.

Wie umfangreiche Versuche zeigten, ist es möglich, den Kalkbindeeffekt durch Zugabe verschiedener Puzzolane zu erreichen. Hierzu gehören natürliche Puzzolane wie Traß, Santorinerde, italienische Puzzolane, französischer Gaise, Diatomeenerde und andere ähnliche

Stoffe, deren Bezeichnung regional verschieden ist, sowie künstliche Puzzolane wie Flugasche aus Steinkohlenkraftwerken bzw. feingemahlene Schmelzkammerkesselschlacke.

Weiterhin läßt sich Kalk sehr intensiv mit Silikatstäuben aus der chemischen oder metallurgischen Industrie und natürlich mit reiner Kieselsäure wie Quarzmehl und sublimierter Kieselsäure binden. Auch haben sich Gemische aus Puzzolanen und Kieselsäure vor allen Dingen aus wirtschaftlichen Gründen als sehr vorteilhaft erwiesen.

Im Gegensatz zu Stahlbeton, wo ein Überschuß an freiem Kalk zum Rostschutz der Armierung zwingend erforderlich ist, kann beim erfindungsgemäßen Mineralfaserbeton der Anteil an Beigaben von Puzzolan oder Kieselsäure erheblich erhöht werden, zum Beispiel bis zu 60 % des Zementgewichtes, ohne daß die Betonfestigkeit wesentlich beeinträchtigt wird. Damit wird aber eine gegenüber dem bisherigen Stand der Technik entgegengesetzte Zielsetzung angestrebt, nämlich der weitgehende Abbau von Überschüssen an Kalk in der Betonmasse.

Ein weiterer wesentlicher Grund, erfindungsgemäß Mineralfasern in Form von Puzzolan herzustellen, ist die Temperaturbeständigkeit. Wie bereits erwähnt beginnen die Erweichungspunkte bei Glas mit $400^{o}$C, bei Basaltwolle bei $750^{o}$C und erreichen damit die normengemäße Prüftemperatur von $1000^{o}$C zur Klassifizierung als feuerbeständig nicht. Die erwähnten Puzzolane habe in reiner Form eine Dauertemperaturbeständigkeit von $1250^{o}$C. Solch ein reines Puzzolan ist Kaolin. Auch aus Kaolin wird Isolierwolle hergestellt, diese ist jedoch wegen der sehr hohen Temperaturen, die zur Produktion erforderlich sind, für die Verwendung der Armierung im Beton zu teuer. Puzzolane mit einem ausreichenden Gehalt an Flußmitteln in Form von Eisenoxiden haben deutlich niedrigere Fließpunkte und sind daher zu gleichen Kosten zu verarbeiten wie die bekannten Mineralwollen. Die Erweichungspunkte dieser Puzzolane liegen bei $1050^{o}$C und damit über der Normengrenze nach DIN 4102 und sind damit als feuerbeständig zu bezeichnen.

Erfindungsgemäß werden nun als Rohstoffe für die Herstellung solcher puzzolangleicher Fasern Tonerde oder ähnliche Bodenvorkommen wie Schiefer, die nach dem Aufschmelzen ein Puzzolan ergeben, verwendet. Ferner können ebenfalls natürlich vorkommende Puzzolane gleicher Zusammensetzung verwendet werden sowie künstlich entstandeneStoffe wie Flugasche und Schmelzkammerkesselschlacke aus Steinkohlekraftwerken.

Allen diesen Stoffen ist eigen, daß sie nach der Sinterung oder Schmelze mit Kalk Calciumaluminathydrat bilden.

Besonders die Verwendung von Flugasche und Schmelzkammerkesselschlacke ist unter dem Gesichtspunkt der Abfallverwertung von besonderem Interesse.

Die Schmelzkammerkesselschlacke bietet erfindungsgemäß noch die Möglichkeit, die flüssige Schlacke unmittelbar zu Fasern zu verarbeiten ohne die Schlacke wieder aufschmelzen zu müssen. Hierbei wird erfindungsgemäß die heiße flüssige Schlacke von mehreren Kesseln eines Kraftwerkes in einem Mischbehälter gesammelt, wie er zum Beispiel in der Stahlindustrie als Roheisenmischer bekannt ist. Aus dem Mischer wird die homogenisierte Masse flüssig abgezogen und unmittelbar zu Fasern verarbeitet. Diese Maßnahme ist notwendig, weil der Kesselbetrieb auf den jeweiligen Energieverbrauch abgestellt wird, sodaß die Schlackenmenge aus einem Kessel sehr schwanken kann. Solche Schwankungen würden die Faserherstellung unmöglich machen. Während des Abzugs der Schlacke aus dem Kessel, beim Mischen und Bevorraten geht ein Teil der Wärme verloren, die für die richtige Viskosität der Masse zur Faserherstellung erforderlich ist. Diese Wärme muß wieder zugeführt werden, um eine zuverlässige Faserherstellung sicherzustellen. Auf diese Weise wird erfindungsgemäß die Energie zum Verflüssigen des Rohstoffs gespart.

Die Herstellung der Fasern aus den erfindungsgemäßen Rohstoffen erfolgt mit den bekannten zum Stand der Technik gehörenden Verfahren, sofern damit die Einstellung einer bestimmten Faserdicke möglich ist. Hierbei sind zu unterscheiden Schleuder- oder Blasverfahren, bei denen die Fasern in relativ kurzen Stücken anfallen, sie werden Stapelfasern genannt, und Ziehverfahren, bei denen endlose Fasern aus einer Düse gezogen werden. Bei diesem Verfahren entstehen monofile Fasern.

Die geblasene oder geschleuderte Stapelfaser ist nicht so gleichmäßig wie die monofile gezogene Faser jedoch billiger herzustellen. Es ist daher je nach Verwendungszweck zu entscheiden, welches Verfahren eingesetzt werden soll.

Für die Herstellung eines Faserbetons wird es bei normaler Beanspruchung ausreichen, die erfindungsgemäß hergestellten Fasern in die Betonmasse einzumischen oder einzustreuen. Soll jedoch ein Spritzverfahren ähnlich der Herstellung von Kunststofflaminaten angewandt werden, so ist es notwendig, Garne und Fäden herzustellen, die von einer Spule abgewickelt und der Spritzvorrichtung zugeführt werden können. Dann müssen die Fasern zu Garnen oder Fäden versponnen werden, was unabhängig von dem jeweiligen Herstellungsverfahren mit zum Stand der Technik gehörenden Vorrichtungen möglich ist. Bei besonders hohen Anforderungen an die Zug-Festigkeit eines Bauteils müssen die Fasern in Richtung der Zugbeanspruchung ausgerichtet werden. Das wird am besten dadurch erreicht, daß die Garne aus der erfindungsgemäß hergestellten Faser zu Gewebe verarbeitet werden und dieses Gewebe ebenso wie eine Betonstahlarmierung beim Einfüllen des Betons in die Form mit eingelegt wird.

Mit einer solchen Technik unter Verwendung des erfindungsgemäß hergestellten Gewebes werden Betonfestigkeiten erreicht, die denen eines hochbeanspruchten Stahlbetons nicht nachstehen jedoch in Bezug auf ihr Brandverhalten diesem erheblich überlegen sind.

Patentansprüche

1. Verfahren zur Herstellung von Faserbeton unter Zusatz von Mineralfasern mit Portlanzement als Bindemittel sowie eine dafür geeignete Mineralfaser dadurch gekennzeichnet, daß

a eine Mineralfaser aus einem Rohstoff verwendet wird, der nach dem Aufschmelzen einem Puzzolan entspricht, das in Reaktion mit dem freien Kalk des Zementes Calciumaluminathydrat bildet,

b dieser Rohstoff nur einen geringen Anteil an Erdalkalien von insgesamt nicht mehr als 15 % und einen Anteil von Calciumoxid allein von nicht mehr als 10 % enthält,

c die Dicke der Mineralfaser so groß eingestellt ist, daß diese die Tiefe der Reaktion bei der Bildung von Calciumaluminathydrat an der Oberfläche der Faser um mehr als das Doppelte übersteigt,

d dem Gemenge aus Fasern und Portlandzement eine solche Menge kalkbindender betonunschädlicher Stoffe beigegeben werden, daß der freie Kalk vollständig gebunden wird oder nur noch eine geringe kontrollierbare Restmenge des Freikalkes mit der als Armierung verwendeten puzzolanartigen Mineralfaser reagieren kann, sodaß eine vollständige Auflösung der Mineralfaser durch Umbildung zu Calciumaluminathydrat vermieden wird.

2. Verfahren nach Anspruch 1 dadurch gekennzeichnet, daß der Rohstoff zur Herstellung der Mineralfaser aus Tonerde oder tonerdeähnlichen Stoffen wie Schiefer besteht.

3. Verfahren nach Anspruch 1 dadurch gekennzeichnet, daß

a als Rohstoff zur Herstellung der Mineralfaser natürliche oder künstliche Puzzolane, wie Eruptivgesteine, Verbrennungsrückstände von Steinkohlekraftwerken wie Flugasche und/oder Schmelzkammerkesselschlacke verwendet werden,

b als Rohstoff Schmelzkammerkesselschlacke in heißem flüssigen Zustand aus einem oder mehreren Kesseln abgezogen, in einem zum Mischen geeigneten Vorratsbehälter gesammelt, homogenisiert und dann unmittelbar im flüssigen Zustand zur Faserherstellung verwendet wird.

4. Verfahren nach Anspruch 1 - 3 dadurch gekennzeichnet, daß die Mineralfaser als Stapelfaser mit Hilfe von bekannten Blas- oder Schleudervorrichtungen hergestellt wird.

5. Verfahren nach Anspruch 1 bis 3 dadurch gekennzeichnet, daß die Mineralfaser mit bekannten Vorrichtungen monofil gezogen wird.

6. Verfahren nach Anspruch 1 bis 5 dadurch gekennzeichnet, daß die nach Anspruch 4 geblasenen oder geschleuderten oder nach Anspruch 5 gezogenen Fasern zu Fäden oder Garnen versponnen werden, die dann als Armierung im Beton verwendet werden.

7. Verfahren nach Anspruch 1 bis 6 dadurch gekennzeichnet, daß die nach Anspruch 6 gewonnenen Fäden oder Garne zu Gewebe verarbeitet werden, das dann als Armierung im Beton verwendet wird.

8. Verfahren nach Anspruch 1 bis 7 dadurch gekennzeichnet, daß als Zusatzmittel zum Resorbieren des freien Kalkes des Portlandzementes Puzzolane in mehlfeinem Zustand verwendet werden, zum Beispiel natürliche Stoffe wie Traß, Santorinerde, italienisches Puzzolan, französicher Gaise, Diatomeenerde und/oder ähnliche oder künstliche Stoffe wie Flugasche und/oder feingemahlene Schmelzkammerkesselschlacke von Steinkohlekraftwerken.

9. Verfahren nach Anspruch 1 bis 7 dadurch gekennzeichnet, daß als Zusatzmittel zum Resorbieren des freien Kalkes des Portlandzementes aktive Kieselsäure in Form von Quarzmehl und/oder Kieselsäuresublimat und/oder hochkieselsäurenaltige Abfallstäube und/oder Kieselfluorwasserstoffsäure verwendet wird.

10. Verfahren nach Anspruch 1 bis 9 dadurch gekennzeichnet, daß
als Zusatzmittel zum Resorbieren des freien Kalkes des Portlandzementes eine Mischung aus Puzzolan nach Anspruch 8
und Kieselsäure nach Anspruch 9 verwendet wird.

0016369

Europäisches Patentamt

**EUROPÄISCHER RECHERCHENBERICHT**

Nummer der Anmeldung

EP 80 10 1062

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 138 161 (GRÜNZWEIG & HART-MANN) <br> * Ansprüche 1 bis 4 * <br> -- | 1-3, 7,9 |
| | DE - A1 - 2 556 539 (EUROC ADMINISTRA-TION) <br> * Seite 8 * <br> -- | 1,8, 9,10 |
| | DE - A - 2 238 523 (NATIONAL RESEARCH DEVELOPMENT) <br> * Ansprüche * <br> -- | 1 |
| P | DE - A1 - 2 809 638 (IHLEFELD) <br> * Ansprüche * <br> -- | 1-7 |
| | DE - A - 2 411 864 (TAC CONSTRUCTION MATERIALS) <br> * Ansprüche * <br> -- | 1,9 |
| A | DD - A - 131 642 (SEIFERT et al.) <br> * Ansprüche; Seite 1 * <br> -- | 1 |
| A | DE - A1 - 2 652 149 (CORNING GLASS WORKS) <br> -- | |
| A | DE - A1 - 2 656 002 (INSTITUTUL DE CER-CETARI, PROIECTARI, TEHNOLOGII STICLA SI CERAMICA FINA BUCUREST) <br> -- <br> ./.. | |

**KLASSIFIKATION DER ANMELDUNG (Int.Cl.3)**

C 04 B 29/04
C 04 B 31/06

**RECHERCHIERTE SACHGEBIETE (Int. Cl.3)**

C 03 C 13/00
C 04 B 15/00
C 04 B 29/04
C 04 B 31/00
C 04 B 43/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angefuhrtes Dokument
L: aus andern Grunden angefuhrtes Dokument
&: Mitglied der gleichen Patent-familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 28-05-1980 | HÖRNER |

EPA form 1503.1 05.78

Europäisches
Patentamt

**EUROPÄISCHER RECHERCHENBERICHT**

Nummer der Anmeldung

EP 80 10 1062
– Seite 2 –

| | EINSCHLÄGIGE DOKUMENTE | | | KLASSIFIKATION DER ANMELDUNG (Int.Cl.3) |
|---|---|---|---|---|
| Kategorie | Kennzeichnung des Dokuments mit Angabe, soweit erforderlich, der maßgeblichen Teile | | betrifft Anspruch | |
| A | FR – A1 – 2 281 338 ( STE EUROPEENNE DES PRODUITS REFRACTAIRES) | | | |
| | | | | RECHERCHIERTE SACHGEBIETE (Int. Cl.3) |